Europäisches Patentamt

European Patent Office

Office européen des brevets

(19)

(11) Publication number: **0 059 629**
**A1**

## (12) EUROPEAN PATENT APPLICATION

(21) Application number: 82301018.6

(22) Date of filing: 01.03.82

(51) Int. Cl.³: **F 24 F 7/00**
F 24 F 3/048, B 01 D 29/10
B 01 D 29/38, B 01 D 35/22

(30) Priority: 03.03.81 GB 8106663

(43) Date of publication of application:
08.09.82 Bulletin 82/36

(84) Designated Contracting States:
BE CH DE FR IT LI NL

(71) Applicant: Thermocycle (U.K.) Limited
6th Floor Colston Centre Colston Street
Bristol Avon(GB)

(72) Inventor: Chambers, John
14 Henleaze Road Westbury-on-Trym
Bristol Avon(GB)

(74) Representative: Wynne-Jones, John Vaughan et al,
Wynne-Jones, Lainé & James 22, Rodney Road
Cheltenham Gloucestershire GL50 1JJ(GB)

(54) Air conditioning apparatus.

(57) This invention relates to air conditioning apparatus comprising a chiller (10), a heat exchanger (11) connected across the outputs of the chiller (10) and disposed in an air duct (12), an air tower cooling circuit, generally indicated at (13), for cooling the chiller (10) and connectable by pipes (14) and (15) and valves (16) and (17) to supply cooling liquid to the heat exchanger (11). A strainer (21) is located in the system to clean water flowing from the air cooling tower (20) to the chiller (10) or the heat exchanger (11). Provision is made for back washing the strainer (21). Various constructions of the stainer (21) and its filter elements are described.

FIG. 1.

EP 0 059 629 A1

Croydon Printing Company Ltd.

-1-

## Air Conditioning Apparatus

This invention relates to air conditioning apparatus and the control of such apparatus.

In many known air conditioning systems there is a main cooling circuit in which water chilled by a refrigerator passes through one or more heat exchangers. Additionally there is often a further circuit for cooling the refrigerator which includes an air cooling tower on the roof of the building. Refrigerators are known to consume well over 50% of the total energy requirements of such air conditioning systems. It has therefore been proposed to connect the air cooling tower across the heat exchanger, whilst isolating the refrigerator, whenever the external temperature falls below a known level. Although such a system does provide a reduction in energy consumption and therefore, running costs, the energy consumption of such systems is still excessive. In addition the known system introduces a number of problems in relation to filtering the air cooled liquid. It is an object of the present invention to provide an efficient and relatively inexpensive air conditioning system.

From a first aspect the invention consists in a modular unit for converting the mode of operation of an existing air conditioning system incorporating refrigerating means, a heat exchanger and an external cooling tower, the unit including a filter connectable downstream of the cooling

JWJ/BKCD/JCW                    -1-

tower and control means for connecting the air cooling tower via the filter across the heat exchanger.

The control means may include a plurality of fluid valves and may further include a microprocessor for controlling the operation of the valves and/or the filter. Additionally or alternatively the modular unit may include means for displaying one or more operating parameters of the air conditioning apparatus. Similarly it may include means for providing an alarm whenever an operating parameter attains a predetermined value.

From a second aspect the present invention consists in air conditioning apparatus for a building comprising a first liquid circuit including refrigerating means for cooling liquid in the circuit and a heat exchanger for cooling air within the building, a second liquid circuit having liquid cooling means external to the building and control means for connecting the second circuit across the heat exchanger either in a first mode in which the refrigerating means is simultaneously switched off and isolated from the heat exchanger or in a second mode in which a mixture of liquid from the refrigerating means and of the liquid from the liquid cooling means flows through the heat exchanger, the control means being operable in accordance with environmental conditions inside and/or outside the building.

The liquid cooling means may be an air cooling tower and filter means may be provided for cleaning the liquid

-3-

in or from the second liquid circuit. In a preferred embodiment the apparatus further comprises means for back washing the filter means, in which case the back washing means may operate automatically during normal operation and the apparatus may include an override control for preventing excessive drainage of either the first and second liquid circuits during back wash.

The air conditioning apparatus may include heat exchange means for exchanging heat between the back wash liquid and liquid circulating in the first or second circuits and additionally, or alternatively, it may further comprise means for recycling the back wash liquid into the first or second circuits.

The control means of the apparatus may be operable in accordance with the enthalpy, or wet bulb temperature of the air entering and/or leaving the building or a part thereof.

The apparatus may further comprise means for operating the refrigerating means whereby, in conditions of partial load, the temperature of the liquid in the first circuit is varied inversely with respect to the external environmental temperature.

The filter may be constructed in a modular unit with the control and/or operating means. In this case the control means and/or the operating means may include at least one microprocessor.

-4-

According to a third aspect the invention consists in air conditioning apparatus for a building comprising a first liquid circuit including refrigerating means for cooling liquid in the circuit and a heat exchanger for cooling air within the building, a second liquid circuit for cooling the refrigerating means having a cooling tower external to the building and including filter means downstream of the tower and a third liquid circuit for selectively connecting the second circuit across the heat exchanger in accordance with environmental conditions inside and/or outside the building, a part thereof or a room therein.

According to a fourth aspect the invention consists in air conditioning apparatus for a building comprising a first liquid circuit including refrigerating means for cooling liquid in the circuit and a heat exchanger for cooling air within the building, a second liquid circuit for cooling the refrigerator means having liquid cooling means external to the building, and a third liquid circuit for selectively connecting the second circuit across the heat exchanger and control means for controlling the operation of the refrigerating means and/ or the connection of the second circuit across the heat exchanger in accordance with the enthalpy or wet bulb temperature of air entering and/or leaving the building or a part thereof or inside or outside a room in the building.

JWJ/BKCD/JCW                    -4-

0059629

-5-

From a fifth aspect the invention consists in air conditioning apparatus for a building comprising a first liquid circuit including refrigerating means for cooling liquid in the circuit and a heat exchanger for cooling air within the building, a second liquid circuit for cooling the refrigerating means having a liquid cooling means external to the building, a third liquid circuit for selectively connecting the second circuit across the heat exchanger and means for operating the refrigerating means whereby the temperature of the liquid in the second circuit varies inversely with the external environmental temperature.

From a sixth aspect the invention consists in air conditioning apparatus for a building comprising a first liquid circuit including refrigerating means for cooling liquid in the circuit and a heat exchanger for cooling air within the building, a second liquid circuit for cooling the refrigerating means having a cooling tower external to the building,a third liquid circuit for selectively connecting the second circuit across the heat exchanger, filter means downstream of the tower in the second or third circuits and anti-drain means for automatically maintaining a predetermined quantity of liquid in one or more of the liquid circuits.

The filter means may have an automatic back washing facility, in which case the anti-drain means may include means for overriding the back wash facility.

JWJ/BKCD/JCW           -5-

-6-

From an eighth aspect the invention consists in a method of conditioning air in a building comprising supplying cooling liquid to a heat exchanger from one or both simultaneously of a refrigerating means and a liquid cooling means, external to the building, and selecting the source of cooling liquid in accordance with environmental conditions inside and/or outside the building.

From a ninth aspect the invention consists in a filter including an inlet, an outlet, filter elements for filtering fluid flowing between the inlet and the outlet, a back wash discharge outlet, and a rotatable back wash pipe for connecting, one at a time, the inlets of the filter elements to the discharge outlet, wherein the back wash pipe is free to move away from the filter elements and the discharge pipe to allow maintenance access.

Preferably the back wash pipe is mounted on a hinged door , which may also carry a motor for rotating the back wash pipe, in which case a rotary coupling extends between the motor and the back wash pipe.

According to a tenth aspect the invention consists in a filter including an inlet, an outlet, filter elements for filtering fluid flowing between the inlet and the outlet, and guide means at the inlet end of the filter elements for swirling the fluid flow so that it is

-7-

generally evenly distributed along the length of the filter element.

In a preferred embodiment the guide means comprise a frusto-conical body having an annular flange extending around the periphery of its larger end, the flange having a plurality of slots formed therein and a swirl-inducing guide element for each slot.

From an eleventh aspect the invention consists in a filter comprising a body having an inlet and an outlet, filter elements disposed in inner and outer arrays in the body such that fluid flowing from the inlet to the outlet flows through one or other of the elements, and means for reversing the flow through one element to clean the element whilst maintaining normal filtering flow through the other elements, the flow reversing means operating successively on elements in one array and then on elements in the other array.

Preferably the flow is reversed by connecting the element to drain. The elements may be hollow elongate elements and they may be disposed such that during filtering fluid flows outwardly through their walls. In this latter case the inside of each element is connected to drain for reverse flow.

The arrays may be generally circular and are preferably coaxial. The flow reversing means may comprise a pair of relatively rotatable pipes arranged to successively sweep the inlet ends of the elements in their respective array. Preferably the pipes are motor driven in which case the pipes may be coaxially mounted on a rotatable driven drain conduit at the level of outlets in the wall of the drain conduit and means may be provided for releasably drivingly engaging first one pipe to the conduit and then other pipe, the arrangement being such that in the engaged position each pipe debouches into the conduit and in the disengaged position flow through the disengaged pipe or pipes is prevented.

The filter element inlets may be formed in a wall in which case, in the disengaged position, each pipe is located with its inlet end closed off by the wall.

Operation of the reverse flow means may be intermittent and may depend on operating conditions in the filter. For example, reverse flow may be initiated whenever the pressure difference between the inlet and the outlet exceeds a predetermined valve,

From a twelfth aspect the invention consists in a filter element for filtering liquids, defining a plurality of filter gaps, the element being so constructed that the size of at least some of the gaps increases whenever the filter is back washed.

The gaps may be defined by adjacent edges of relatively movable components, which are shaped such that the back wash flow through the element urges the components apart to increase the size of the gaps.

Preferably the components are resiliently urged towards one another and carry spacer means to define the minimum gap between the components. The components, or at least a part thereof, may be generally V-shaped in cross-section, in which case the V-sections may be directed generally in the direction of normal flow. Alternatively the components may be diamond shaped in cross-section, and in either case they may be constituted by parts of a spring, in which case means are provided for holding the spring in compression.

In another embodiment the components are constituted by a stack of elements resiliently biased together.

In any of these cases the components may be mounted on a perforated cylinder and means may be provided for allowing manual partial release of the components for cleaning.

Any of the filter means of the aforementioned apparatus or any of the aforementioned filters may include a filter element as defined above.

The invention can be performed in a number of ways, specific embodiments of which, with modifications, will now be described, by way of example, with reference to the accompanying drawings, in which:

Figure 1 is a diagrammatic plan of an air conditioning apparatus according to the invention;

-10-

Figure 2 is a part cut away side view of a filter for use in the apparatus of Figure 1;

Figure 3 is an enlarged part sectional view of a filter element for use in the filter of Figure 2;

Figure 4 is an end view of the filter element, when viewed on the arrow A, but on a reduced scale;

Figure 5 is an enlarged scrap section taken along the line IV-IV in Figure 4; and

Figure 6 is an enlarged scrap view on the arrow B in Figure 3.

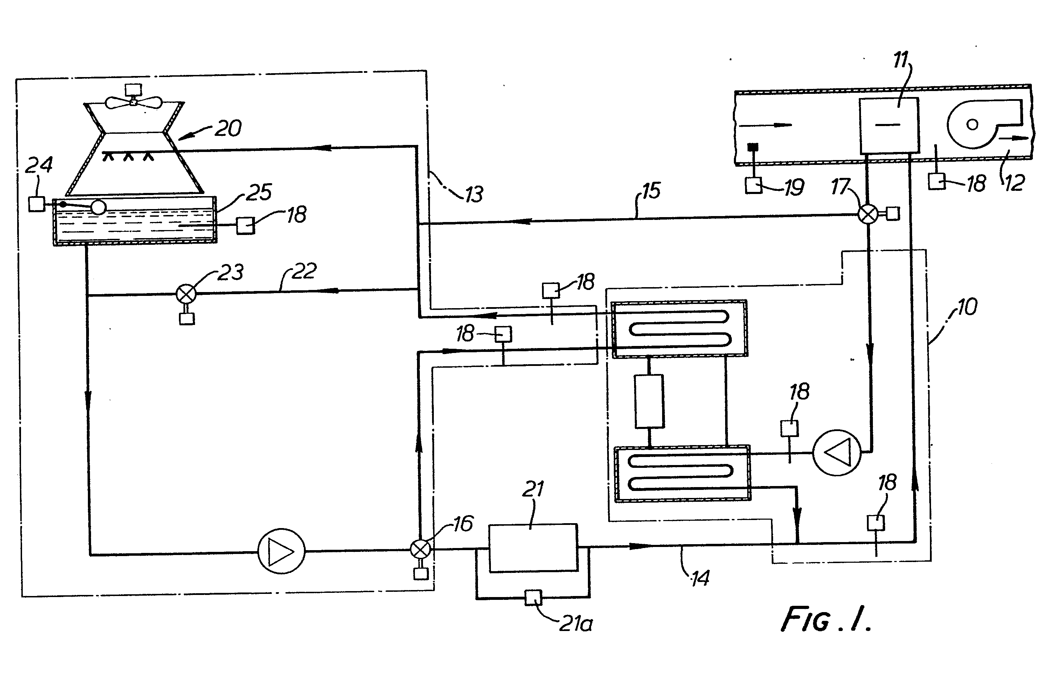

The air conditioning apparatus shown in Figure 1 broadly comprises a chiller or refrigerator generally indicated at 10, a heat exchanger 11 connected across the outputs of the chiller 10 and disposed in an air duct 12, and and air tower cooling circuit generally indicated at 13 for cooling the chiller 10 and connectable by pipes 14 and 15 and valves 16 and 17 to supply cooling liquid to the heat exchanger 11.

A number of temperature detectors 18 are disposed throughout the system to supply temperature readouts to a microprocessor control system (not shown). An enthalpy detector 19 is located in the air duct 12, which is for the purpose of this description the main air intake duct

JWJ/BKCD/JCW                    -10-

for the building being served by the apparatus, The output of the enthalpy detector is also fed to the control system.

The control system is arranged to operate the apparatus in one of three modes, in accordance with the inputs to the system. In the first mode valves 16 and 17 are adjusted to connect the chiller 10 alone across the heat exchanger 11; circuit 13 merely serving to cool the chiller. In the second mode the air cooling tower circuit 13 alone is converted to the heat exchanger 11 and the chiller is isolated and switched off. In the third mode valves 16 and 17 are arranged to allow a proportion of the liquid from the air cooling tower circuit 13 to flow through the heat exchanger 11, whilst simultaneously permitting operation of the chiller.

The mode selected by the control system depends on a number of factors such as the enthalpy, or alternatively the wet bulb temperature, of the air entering the duct 12, the temperature of the cooling liquid in the circuit 13, including the temperature of the return flow liquid, the temperature existing in the building (a measure of which can be obtained by monitoring the enthalpy of the output air from the building), the temperature desired in the building or parts thereof and the economic operating ranges of the particular equipment in use. For any set of conditions the control system is programmed to operate the apparatus for minimum energy consumption commensurate with maintaining the desired psychometric conditions within the building.

The control system may also be arranged to control the chiller so that the temperature of the chill liquid leaving the chiller varies inversely with the external environmental temperature in such a way as to maintain the highest possible chill water temperature which can result in the desired air temperature in duct 12.

As the chiller 10 is responsible for the major proportion of the energy consumption of the system, it will be appreciated that the use of the apparatus in the third mode will reduce the energy costs of the apparatus as it makes it possible to obtain partial cooling of the cooling liquid by passing it through the air cooling tower 20 before the environmental temperature has dropped sufficiently for the tower to cool all the liquid.

When the apparatus is operated in its second or third modes liquid, which has passed through the air cooling tower 20,is fed through the refrigerator 10 and/or the heat exchanger 11. Such water is often contaminated and it is necessary to filter this water for example by the strainer or filter 21 in pipe 14. Alternatively the filter may be placed in circuit 13 downstream of the cooling tower 20. In this position it also serves to clean the cooling tower circuit liquid during the first mode of operation preventing a big build up of contamination. Details of filter 21 will be discussed below.

A bypass 22 is provided in cooling tower circuit 13 to allow the temperature of the liquid in this circuit to be controlled by mixing in uncooled liquid. A valve 23 in this line is controlled by the control system.

Preferably the filter 21, valves 16 and 17 and the control system are assembled in a modular unit, which can be incorporated into an existing chiller system having an air cooling tower. The module may also include operating parameter displays and alarm circuits for giving audible and/or visual signals when safe levels are exceeded by one or more operating parameters.

As the filter 21 will become progressively contaminated it is desirable to use a filter, which can be back washed without interrupting the normal function of the system. Typically such filters include an array of filter elements,which can be back washed singly or in pairs, whenever the pressure difference across them exceeds a given value. A suitable detector is shown at 21a. The output of the detector can be fed to the control system and back washing can be superintended by the control system. This is important because in existing systems if the back washing is ineffective, as can occur if water is heavily contaminated, the back washing cycle can continue indefinitely draining down the whole system. In the apparatus of Figure 1 a level detector 24 is provded in the reservoir 25 of the cooling tower 20. This detector enables the lost liquid to be replenished and further can provide an 'override back wash' signal to the control system

-14-

to prevent excessive draining of the system.

In cases where the user's water supply is metered it can be economic to drain the back wash water into a tank from where it can be cleaned and recirculated into reservoir 25 on demand. Further a heat exchanger can be incorporated into the tank to provide another source of cold, or alternatively a heat source for other purposes, depending on the operating conditions at back wash.

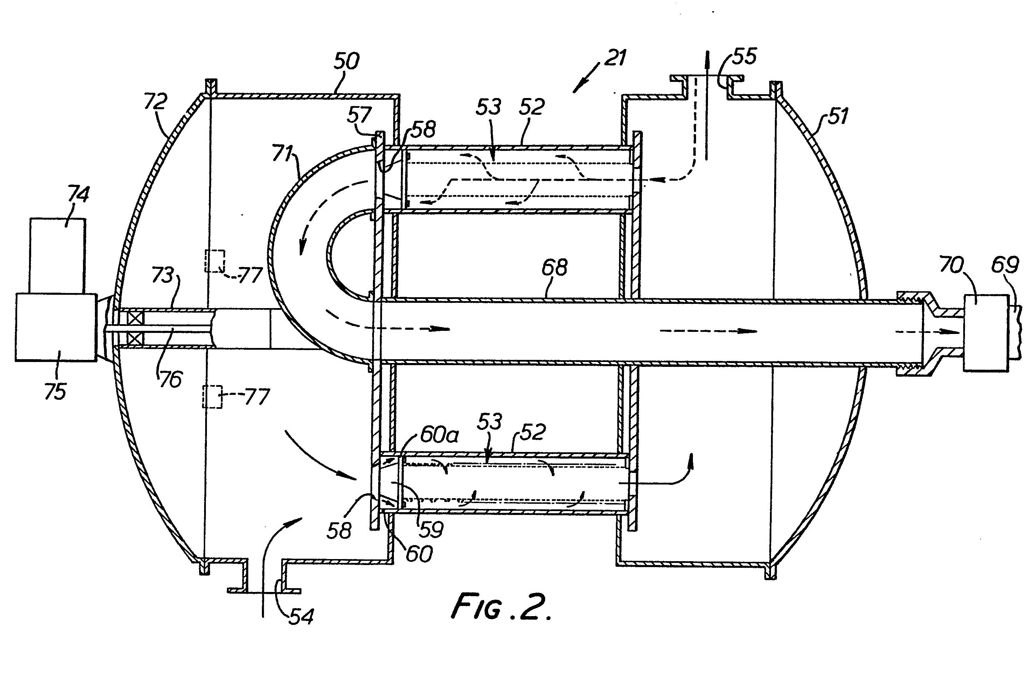

Figure 2 shows one example of a suitable filter 21 for use in the system. The filter comprises an inlet header 50, an outlet header 51 and interconnecting filter tubes 52, arranged in a circular array. Each filter tube 52 contains a generally cylindrical element 53. In normal operation fluid flows (as shown in solid line) from an inlet 54 in header 50 into tubes 52, through the walls of elements 53, from outside to inside, into the outlet header 51 to outlet 55.

The inlet end of each tube 52 engages a seal plate 57 around respective frusto-conical apertures 58. The apertures 58, together with restrictors 59 mounted on the ends of the filter elements 53, define an annular divergent inlet passage 60 to take the flow of fluid to the peripheries of the elements 53.

Each restrictor 59 is generally frusto-conical and has an annular peripheral flange 60a around its larger

JWJ/BKCD/JCW                    -14-

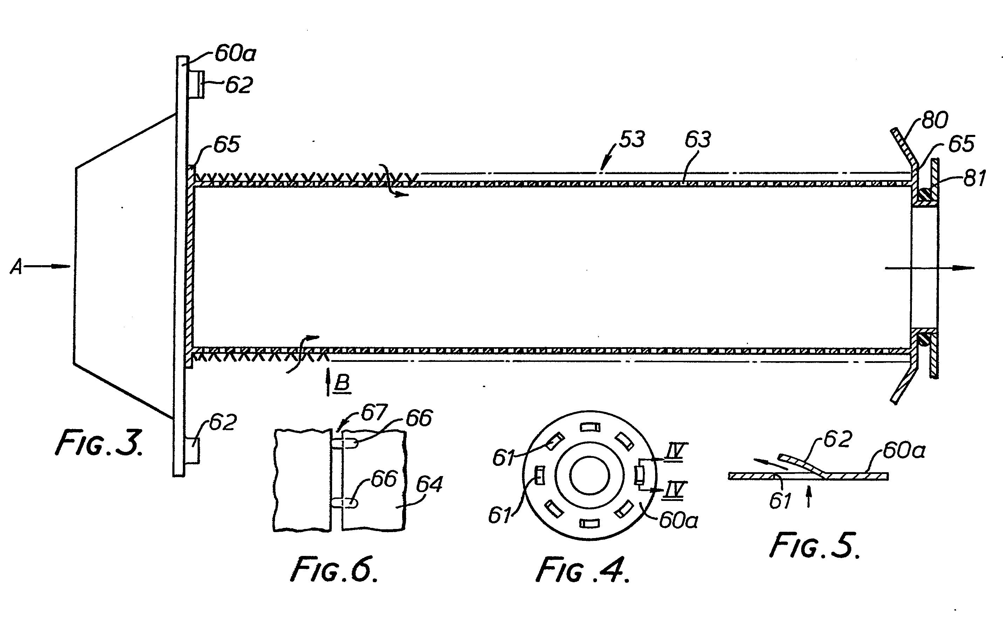

(downstream) end. The flange 60a (as can best be seen in Figures 3 to 5) is formed with slots 61 spaced in an annulus around the flange and having upstanding guide elements 62 on their downstream side for imparting a swirl to the fluid flowing through the slots 61. The swirling of the fluid causes it to be pushed along the length of the filter element 53 to provide a generally even flow distribution over the length of the element 53.

Referring to Figure 3 each element 53 comprises a perforated hollow cylinder 63 on which is mounted a helical spring 64. The spring 64 is V-shaped in cross-section and is held in compression between end flanges 65 on the cylinder 63, such that the adjacent portions of the spring are urged together. As can be seen in Figure 6 the spring 64 is formed with spaced lateral indentations 66, which engage the adjacent portion of the spring, when it is compressed, and hence define a filter gap 67 of known dimensions (say 1/5000$^{th}$ inch).

When fluid flows in the solid line direction, the pressure of the fluid acts in a sense to open the arms holding the spring in its filtering mode. As filtering progresses particles will become trapped in the gaps 67 causing a pressure drop across the gaps causing detector 21a to initiate back wash. In this mode the fluid flows in the opposite direction, and acts on the opposite-side of the V's i.e. in a sense to close them. This results in the size of the gaps 67 being increased and the trapped particles are released.

In an alternative embodiment the spring may have a diamond cross-section. Still further the spring may be replaced by a stack of suitably shaped components axially biased together. For example the components may comprise shallow hollow frusto-cones having peripheral wings, which are inclined in the opposite sense to the body of their respective component. Appropriately located spacers are formed on each component so that when the components are arranged in a stack in oppositely facing abutting pairs, the spacers provide filtering gaps 37 between the elements.

To enable the elements to be back washed a discharged tube 68 is provided. The tube 68 extends axially from a central aperture in the seal plate 57, through outlet header 51, to a drain 69, via a control valve 70. A U-shaped connecting pipe 71 is mounted for rotation about the axis of the tube 68 and is slidingly and sealing engaged at each end on the seal plate 57, such that as it rotates it successively connects the apertures 58 to the tube 68, causing a pressure reversal in the filter tubes 52 and hence causing the elements in the tubes to be back washed.

The pipe 71 is mounted for rotation on a hinged door 72 of inlet header 50 by a cylindrical casing 73. A motor 74 is mounted on the door 72 by a gear box 75, which is coupled to the pipe 71 by a drive 76, which is enclosed by the casing 73. When the detector 21a detects a 'back wash' condition it causes a single cycle of the motor 75, and hence of the pipe 71, and opens the valve 70. At the end of a cycle the outer end of the pipe 71 engages the plate 57 in a rest position between two apertures 58, so that all the tubes 52 are available for filtering.

The door 72 is hinged, at 77, such that the pipe 71 and the casing 73 can be swung right out of the header 50. The plate 57 is quick releasably mounted on the header so that it to can be removed allowing ready access to the filter elements 53. Preferably one flange 65 is movable outwardly axially to allow partial release of the spring 64 to easy cleaning of the filter element. In any case causing the fluid to flow from outside to inside, which is the reverse of the normal configuration, greatly reduces the cleaning time required.

In some cases it may be desirable to increase the number of tubes 52, by having inner and outer arrays; in which case two back wash coupling pipes may be provided.

It will be appreciated that the inlet 54 may be located tangentially of the header 50, causing the incoming liquid to flow in a vortex. This vortex may

-18-

introduce sufficient swirl into the flow into the filter tubes 52 to allow the flange 60a to be omitted. Indeed, catch plates (not shown) may be attached to the header wall to collect large particles thrown to the outside of the vortex. The flange 65 may be enlarged and bent up at 80 to define an annular cup, which will serve to clear debris from the tube 52, when the filter element 53 is removed for cleaning. The element 53 may be resiliently held in the tube 52 by a compressible ring 81.

JWJ/BKCD/JCW                    -18-

0059629

CLAIMS

1. A modular unit for converting the mode of operation of an existing air conditioning system incorporating refrigerating means (10), a heat exchanger (11) and an external cooling tower (20), the unit including a filter (21) connectable downstream of the cooling tower (20) and control means for connecting the air cooling tower, via the filter, across the heat exchanger.

2. Air conditioning apparatus for a building, comprising a first liquid circuit including refrigerating means (10) for cooling liquid in the circuit and a heat exchanger (11) for cooling air within the building, a second liquid circuit having liquid cooling means (20) external to the building and control means for connecting the second circuit across the heat exchanger either in a first mode in which the refrigerating means (10) is simultaneously switched off and isolated from the heat exchanger (11) or in a second mode in which a mixture of liquid from the refrigerating means (10) and of the liquid from the liquid cooling means (20) flows through the heat exchanger (11), the control means being operable in accordance with environmental conditions inside and/or outside the building.

JWJ/BKCD/JCW                    -1-

3. Air conditioning apparatus for a building comprising a first liquid circuit including refrigerating means (10) for cooling liquid in the circuit and a heat exchanger (11) for cooling air within the building, a second circuit for cooling the refrigerating means having a cooling tower (20) external to the building and including filter means (21) downstream of the tower (20) and a third liquid circuit for selectively connecting the second circuit across the heat exchanger (11) in accordance with environmental conditions inside and/or outside the building, a part thereof, or a room therein.

4. Air conditioning apparatus for a building comprising a first liquid circuit including refrigerating means (10) for cooling liquid in the circuit and a heat exchanger (11) for cooling air within the building, a second liquid circuit for cooling the refrigerating means (10) having a cooling tower (20) external to the building, a third liquid circuit for selectively connecting the second circuit across the heat exchanger (11), filter means (21) downstream of the tower in the second or third circuits and anti-drain means for automatically maintaining a predetermined quantity of liquid in one or more of the liquid.

JWJ/BKCD/JCW                    -2-

5. A filter including an inlet (54), and outlet (55), filter elements (53) for filtering fluid flowing between the inlet (54) and outlet (55), a back wash discharge outlet (68), and a rotatable back wash pipe (71) for connecting, one at a time, the inlets (58) of the filter elements to the discharge outlet (68), wherein the back wash pipe (71) is free to move away from the filter elements and the discharge pipe to allow maintenance access.

6. A filter as claimed in claim 5, wherein the back wash pipe is mounted on a hinged door (72).

7. A filter as claimed in claim 6, further comprising a motor (74) for rotating the back wash pipe, the motor being mounted on the door (72) and a rotary coupling (75,76) extending between the motor and the back wash pipe.

8. A filter including an inlet (54), an outlet (55), filter elements (53) for filtering fluid flowing between the inlet (54) and the outlet (55), and means (60) for swirling the fluid flow so that it is generally evenly distributed along the length of the filter element.

9. A filter as claimed in claim 8, wherein the swirling means comprise a frusto-conical body (60) having an annular flange (60a) extending around the periphery of its larger end, the flange having a plurality of openings (61) formed therein and a swirl-inducing guide element (62) for each opening.

10. A filter element for filtering liquids, defining a plurality of filter gaps (67), the element being so constructed that the size of at least some of the gaps (67) increases whenever the filter is back washed.

11. A filter element as claimed in claim 10, wherein the gaps (67) are defined by adjacent edges of relatively movable components (64), which are shaped such that back wash flow through the element urges the components apart to increase the size of the gaps (67).

12. An element as claimed in claim 11, wherein the components (64) are resiliently urged towards one another and carry spacer means (66) to define the minimum gap between the components.

13. An element as claimed in claim 11 or claim 12, wherein the components (64), or at least part thereof, are generally V-shaped in cross-section.

14. An element as claimed in claim 13, wherein the V-sections are directed generally in the direction of normal flow.

15. An element as claimed in any one of claims 11 to 14, wherein the components (64) are constituted by parts of a spring and wherein the element (53) includes means (65) for holding the spring in compression.

16. An element as claimed in any one of claims 11 to 15, wherein the components (64) are mounted on a perforated cylinder (63).

17. A filter as described in any one of claims 5 to 9, incorporating a filter element (53) as claimed in any one of claims 10 to 16.

FIG. I.

FIG. 2.

FIG.3.

60a

62

65

A

B

62

53    63

80

65

81

FIG.6.

67    66

66    64

FIG.4.

61

61

61

IV

IV

60a

FIG.5.

62    60a

61

0059629

European Patent Office

**EUROPEAN SEARCH REPORT**

EP 82 30 1018.6

## DOCUMENTS CONSIDERED TO BE RELEVANT

| Category | Citation of document with indication, where appropriate, of relevant passages | Relevant to claim |
|---|---|---|
| A | RECKNAGEL-SPRENGER "Taschenbuch für Heizung und Klimatechnik" 59th edition 1977, VERLAG R. OLDENBOURG MÜNCHEN WIEN * pages 1360, 1361, 1393; fig. 643-12, 655-17 * <br>--- | 1-4 |
| A | US - A - 2 778 203 (W.F.R. GRIFFITH) * column 4, lines 59 to 74; fig. 10 * <br>--- | 1-4 |
| A | US - A - 2 515 319 (T.K. SHERWOOD) * complete document * <br>--- | 1-4 |
| A | US - A - 2 791 408 (F. LEWIS) * column 2, lines 19 to 22; fig. 2 * <br>--- | 4 |
| X | DE - A1 - 2 803 224 (PROIZVODSTVENNOE OBIEDINENIE TECHENERGOCHIMPROM) * complete document * <br>& US - A - 4 162 219 <br>--- | 5,7 |
| X | BE - A - 878 732 (STANDARD S.A.) * fig. 2, 4 to 6 * <br>--- | 8,9 |
| A | DE - C - 197 072 (E. GOBBI) * page 2, lines 6 to 16; fig. 7 * <br>--- | 10-12 |
| A | DE - C - 1 024 926 (H. LADERER) * complete document *      ./.. <br>--- | 13 |

**CLASSIFICATION OF THE APPLICATION (Int. Cl. 3)**

F 24 F    7/00
F 24 F    3/048
B 01 D    29/10
B 01 D    29/38
B 01 D    35/22

**TECHNICAL FIELDS SEARCHED (Int.Cl. 3)**

B 01 D    25/00
B 01 D    29/00
B 01 D    35/00
B 01 D    46/00
F 24 F    3/00
F 24 F    7/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X | The present search report has been drawn up for all claims

| Place of search | Date of completion of the search | Examiner |
|---|---|---|
| Berlin | 28-04-1982 | KRABEL |

0059629

European Patent
Office

**EUROPEAN SEARCH REPORT**

Application number

EP 82 30 1018.6

- page 2 -

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| A | <u>DE - U - 6 601 843</u> (O. PETRI) <br> * claim 2 * <br> ---- | 16 | |
| | | | **TECHNICAL FIELDS SEARCHED (Int. Cl.³)** |